# EUROPEAN PATENT APPLICATION

(11) **EP 2 693 313 A2**
(43) Date of publication of application: **05.02.2014**
(21) Application number: 13178612.1
(22) Date of filing: 30.07.2013
(51) Int. Cl.: G06F 3/041, G06F 3/044

(54) **Electronic pen input recognition apparatus and method using capacitive-type touch screen panel (tsp)**

(30) Priority: 31.07.2012 KR 20120083957
(71) Applicant: Samsung Electronics Co., Ltd, Gyeonggi-do 443-742 (KR)
(72) Inventor: Rhee, Bongjae, 443-742 Gyeonggi-do (KR); Kim, Jonggoo, 443-742 Gyeonggi-do (KR); Mok, Jinyoung, 443-742 Gyeonggi-do (KR); Park, Jaesun, 443-742 Gyeonggi-do (KR); Seo, Jaemin, 443-742 Gyeonggi-do (KR); Choi, Seungchul, 443-742 Gyeonggi-do (KR)
(74) Representative: Birchenough, Lewis

(57) **Abstract**

An input position detection apparatus using a touch screen panel (TSP) includes: a power supply unit supplying a power; a transmission unit transmitting at least one internal signal formed by the power supplied by the power supply unit; a receiving unit receiving at least one signal among the internal signal transmitted by the transmission unit and at least one external signal transmitted by at least one electronic pen; and a controller comparing a strength of the signal received by the receiving unit with a strength of the internal signal transmitted by the transmission unit, determining a type of input method according to a result of a comparison, and detecting an input position.

## Description

### BACKGROUND

### Field of the Invention

The present disclosure relates to an input apparatus and method equipped with a touch screen panel (TSP), and more particularly, to an electronic pen input recognition apparatus and method using a touch screen panel (TSP).

### Description of the Related Art

As an input means for a computer or a portable device including a tablet PC and a smart phone, hard key buttons as well as a C-type touch screen panel (TSP) are widely used. A finger touch gesture or a passive stylus pen is generally used as an input means, which requires sensors in the touch screen for recognizing pressure which causes a change in the electronic current going through them at the location the screen was touched. However, the finger touch scheme does not meet the consumer's preference for obtaining a fine input as in the pen input scheme. That is, handwriting using a finger is not smooth or cannot precisely represent one's actual handwriting path. Likewise, a passive stylus pen has a low accuracy because using the passive stylus pen has the same effect as the handwriting using a finger. Further, a passive stylus pen (or a non-electronic stylus) has a drawback as it tend to cause all kinds of input errors when the user rests their hands on the screen like they would rest on a piece of paper while writing.

In contrast, an active electronic pen (or an electromagnetic induction device employed as a pointer device) enables the touch screen to recognize handwriting much more clearly, thus closely emulates one's handwriting. However, since a separate sensor board must be added into the bottom of a LCD to use the active electronic pen, an additional cost is generated when using electromagnetic induction technology to operate a touch screen panel (TSP). In addition, due to an electromagnetic induction, it is difficult to mount a separate sensor board because the separate sensor board gives undesired interference to metallic equipment from operation.

### SUMMARY

The present invention has been made in view of the above problems and provides additional advantages, by providing an input apparatus and method to detect an input position of an active electronic pen by using a C-type touch screen panel (TSP), so that an electronic pen recognition function can be added into a finger touch recognition function of TSP

In addition, the present invention is to provide a faster response or processing in response to an input touch by setting a proximate area. An embodiment of the present invention provides an increased detection frequency inside the proximate area or provides a decreased detection frequency outside the proximate area.

In accordance with an aspect of the present invention, an input position detection apparatus using a touch screen panel (TSP)includes: a power supply unit; a transmission unit transmitting at least one internal signal formed by a power supplied by the power supply unit; a receiving unit receiving at least one signal among the at least one internal signal transmitted by the transmission unit and at least one external signal transmitted by at least one electronic pen; and a controller comparing a strength of the signal received by the receiving unit with a strength of the at least one internal signal transmitted by the transmission unit, determining a type of input means according to the comparison outcome, and detecting an input position of the input means.

In accordance with another aspect of the present invention, a method of detecting an input position using a touch screen panel (TSP) includes: detecting at least one signal on the touch panel; comparing a strength of the detected signal with a strength of an internal signal transmitted from a transmission unit; and determining a type of an input means according to the comparison output and detecting an input position of the input means.

In accordance with another aspect of the present invention, a method of detecting an input position using a touch screen panel (TSP) includes: determining whether at least one signal is detected through a first detection attempt in a first area of a touch sensor; confirming a proximate area of the first area wherein the signal is detected as a tracking area when the at least one signal is detected; and tracking a received signal and attempting for detection according to a rule preset in the tracking area.

### BRIEF DESCRIPTION OF THE DRAWINGS

The above features and advantages of the present invention will be more apparent from the following detailed description in conjunction with the accompanying drawings, in which:
FIG. 1 is a block diagram schematically illustrating a configuration of an electronic pen input position detection apparatus using a C-type touch screen panel (TSP) according to an exemplary embodiment of the present invention;
FIG. 2 is a diagram illustrating a function of each element of an input position detection apparatus according to an exemplary embodiment of the present invention;
FIG. 3A is a diagram illustrating a finger touch input and an electronic pen input according to an exemplary embodiment of the present invention;
FIG. 3B is a diagram illustrating a strength difference of a signal between a finger touch input and an electronic pen input according to an exemplary embodiment of the present invention;
FIG. 4 is a flowchart illustrating an input position detection method according to an exemplary embodiment of the present invention;
FIGS. 5A and 5B are diagrams illustrating the methods for optimizing an input position detection from an input position detection apparatus according to an exemplary embodiment of the present invention; and
FIG 6 is a flowchart illustrating a method for optimizing an input position detection from an input position detection apparatus according to an exemplary embodiment of the present invention.

### DETAILED DESCRIPTION

Exemplary embodiments of the present invention are described with reference to the accompanying drawings in detail. The same reference numbers are used throughout the drawings to refer to the same or like parts. For the purposes of clarity and simplicity, detailed descriptions of well-known functions and structures incorporated herein may be omitted to avoid obscuring the subject matter of the present invention.

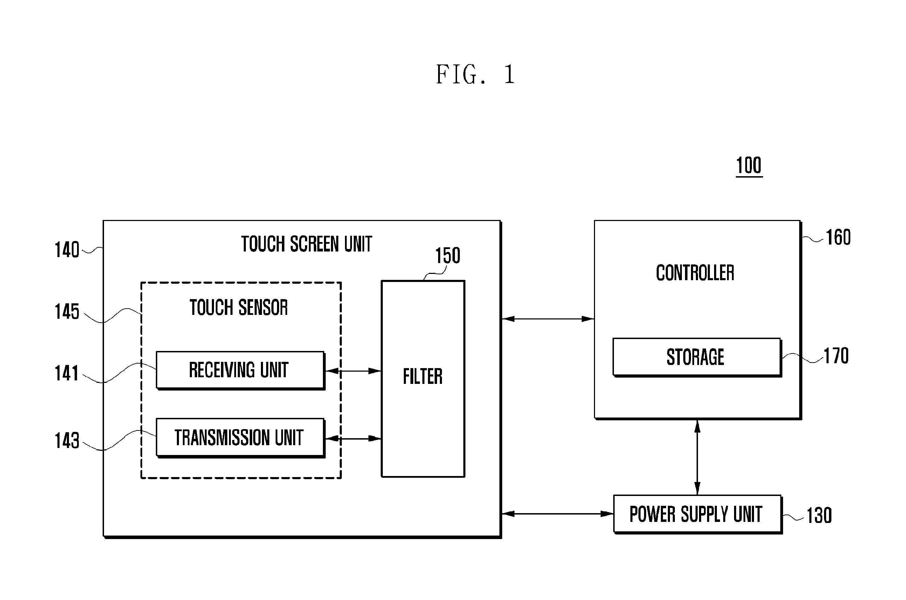

FIG. 1 is a diagram schematically illustrating a configuration of an electronic pen input position detection apparatus using a C-type touch screen panel (TSP) according to an exemplary embodiment of the present invention.

Referring to FIG.1, an input position detection apparatus 100 of the present invention may include a controller 160, a power unit 130, and a touch screen unit 140. The controller 160 may include a storage 170, and the touch screen unit 140 may include a touch sensor 145 which includes a receiving unit 141 and a transmission unit 143, and a filter 150.

The input position detection apparatus 100 of the present invention may be used as a portion of the various products by combining with the peripheral devices those are not described herein or as a finished product itself. For example, it may be used in a portable terminal such as a smart phone, a slate PC, and a tablet PC by coupling to a wireless communication unit, and may be used as a configuration element of a TV, a desktop, and a **lab top.** In addition, it may also be used as an electronic writing instrument itself receiving an electronic pen input. In other words, it may be used in all electronic devices that are equipped with the touch screen 140.

The power supply unit 130 supplies a power to each configuration of an input position detection apparatus 100 which requires a power supply and, in particularly, supplies a power so that the transmission unit 143 of the touch sensor 145 may form an electric field.

When a user inputs a finger touch input or an electronic pen input on a touch screen, the touch sensor 145 outputs an electric signal detected from its input position to a controller 160.

A transmission unit 143 is supplied with an electricity from a power supply unit 130 to form an electric field, and a change in the electric field causes generation of electric signals during operation. Note that the electric signal serves as a standard for determining whether the TSP is touched. That is, a device can determine whether the TSP is touched by sensing a change of the electric signal, as explain in detail later. The transmission unit 143 transmits the electric signal to the receiving unit 141. Here, the electric signal output from the transmission unit 143 is defined as an internal signal wherein the internal signal refers to a signal transmitted from the transmission unit 143. The receiving unit 141 receives the electric signal which is generated based on the change of the electric field formed by the transmission unit 141. In addition, the receiving unit 141 may receive the electric signal through the electric field formed by the external source of the input position detection apparatus 100. Hence, the electric signal received from the external source by the receiving unit is named as an external signal. That is, among electric signals received at the receiving unit 143, an electric signal from transmission unit 143 is an internal signal, and an electric signal from electronic pen is an external signal.

If there is a finger touch input, interference of signal transmission occurs. If there is an electronic pen input, increase of signal strength occurs. In order to find the touch point, the present invention uses these signal changes. The present invention attempts achieve recognizing position (location) of touch inputs without adding an extra magnetic sheet or extra sensor dedicated to the electronic pen.

The filter 150 performs a function of classifying a plurality of electrical signals received by the receiving unit 141 according to the frequency. Since the receiving unit 141 receives not only the signal (i.e., internal signal) transmitted by the transmission unit 143 but also the signal transmitted from the external source (i.e., external signal) of the input position detection apparatus 100, the input position and the input method of each signal may be identified by classifying the detected signal when the controller detects a plurality of signals. The signals classified through the filter 150 according to the frequency of a plurality of signals received by the receiving unit 141 enables the controller 160 to distinguish whether the input is the finger touch input or the electronic pen input, or to determine whether the input is performed by the electronic pen input as explained in details later. In addition, the filter 150 transmits the electric signal to the transmission unit 143 in response to the power supply from the power supply unit 130. That is, the filter 150 filters a signal having a specific frequency using the power from the power supply unit 130.

The controller 160 controls the signal processing and the power supply operation between each element of the input position detection apparatus 100 in order to detect the coordinates of input position according to an exemplary embodiment of the present invention. The controller 160 determines the type of input method and the input position on the touch screen based on the electric signal detected on the touch sensor 145.

More specifically, the controller 160 detects the finger touch input by the change of the strength of the electric signal received at the receiving unit 141.

If there is no finger touch input, the strength of the internal signal remains constant as the strength of the power supplied to the transmission unit 143 from the power supply unit 130 through the filter 150 has a preset value according to the control of the controller 160.

If there is the finger touch input, the uniform electric field formed between the transmission unit 143 and the receiving unit 141 is partially leaking through the finger. That is, a small amount of electrical charges are drawn to the point of contact. Circuits located at each corner of the panel measure the charge and send the information to the controller via the receiving unit 141 for processing.

As a result, the strength of the electric signal received by the receiving unit 141 becomes less in comparison with a situation where a finger touch is not inputted. Here, when the receiving unit 141 transmits such strength information to the controller 160, the controller may determine that the finger touch input has been performed based on a drop in the strength information of the electric signal. In addition, the controller 160 may determine the coordinates where user inputs the finger touch by detecting the position of the receiving unit 141 where the strength of the electric signal of the receiving unit 141 becomes less than the internal signal.

On the other hand, the transmission unit 141 and the receiving unit 143 may configure a grid type touch sensor on the touch sensor 145 so that the controller 160 may know the input coordinates based on the grip type coordinate system. For example, the receiving unit 141 corresponds to a plurality of sensor lines of horizontal axis which configures the grid type touch sensor, and the transmission unit 143 corresponds to a plurality of sensor lines of vertical axis which configures the grid type touch sensor. The controller 160 may determine which axes of the horizontal axis and the vertical axis to use as the receiving unit 141 or the transmission unit 143. Thus, the controller 160 may control the transmission unit 143 to be functioned as the receiving unit 141, and also, the controller 160 may control the receiving unit 141 to be functioned as the transmission unit 143.

When the strength of the electric signal received by the receiving unit 141 from a plurality point of the touch sensors is less than the strength of the internal signal, the controller 160 may determine that the finger touch inputs exist on a plurality of points. In addition, when the controller 160 detects that the strength of the electric signal is sequentially less than the strength of the internal signal, the controller 160 may determine a flick motion wherein the movement speed of the touch position is greater than the preset critical speed, and a drag motion, wherein the movement speed of the touch position is less than the preset critical speed.

The touch input detection of the present invention, as described above, generally uses a capacitive overlay touch sensor. However, the configuration of the apparatus for detecting the touch input detection according to the teachings of the present invention does not exclude the cases which include a touch sensor such as a resistive overlay and an infrared beam, or a pressure sensor.

The storage 170 may be included to the controller 160; however, may be manufactured in a separate configuration. The storage 170 may store a data or the applications and the algorithms corresponding to the various basic operating systems and various user functions which are necessary in order to operate the input position detection apparatus 100.

The storage 170 stores a program for adjusting a signal detecting frequency. For instance, it can increase the signal detecting frequency inside the proximate area and decrease the signal detecting frequency outside the proximate area.

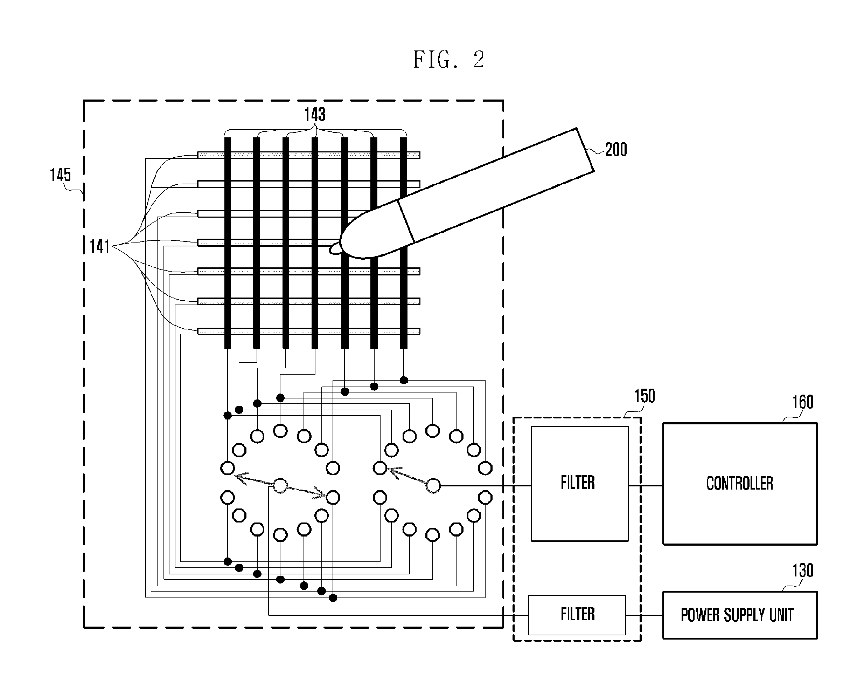

On the other hand, the input position detection apparatus 100 of the present invention does not limit the input method to the finger touch input as described above. The user may possibly use both an active and a passive stylus pen (or touch input) to the apparatus of the present invention. The active electronic pen is an electronic pen operating by transmitting the signal to the apparatus by the electronic pen, which uses the electromagnetic induction, and the passive stylus pen or non-active pen includes a finger input. A detailed description for the active pen introduced in the present invention will be described in the description of FIG. 2.

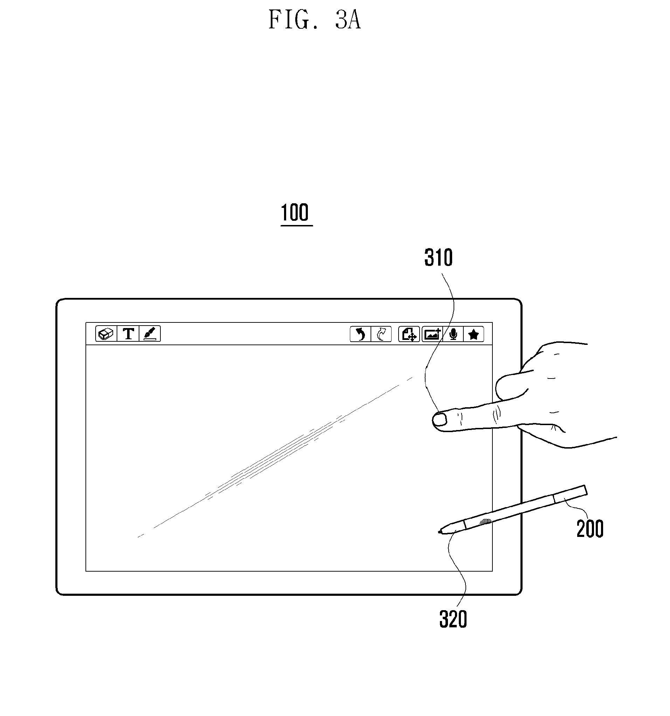

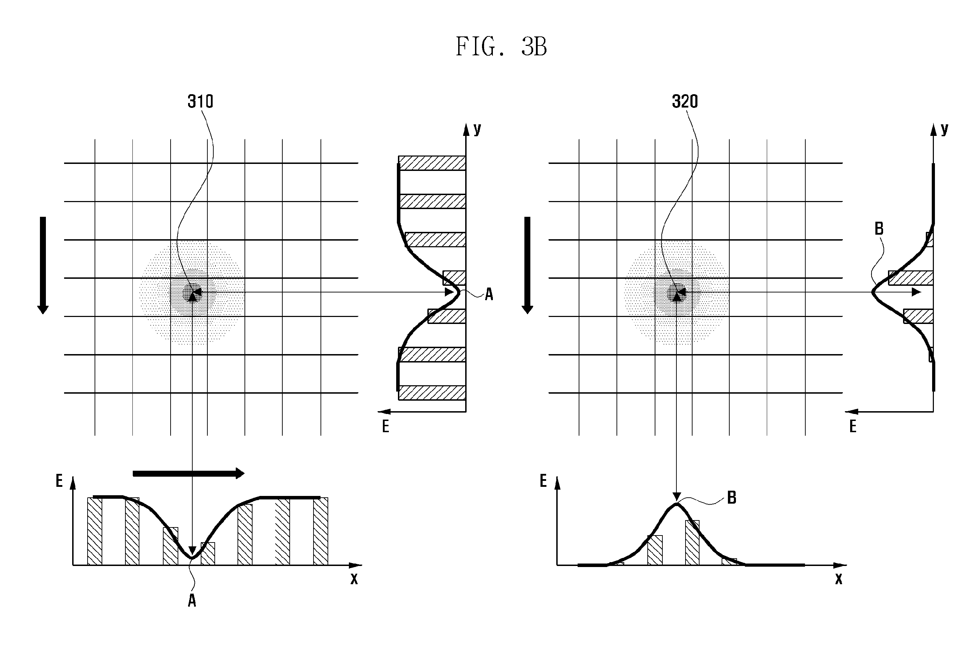

FIG. 2 illustrates each element of an input position detection apparatus 100 described above according to an exemplary embodiment of the present invention. In addition, FIG. 3A is a diagram illustrating the finger touch input and the electronic pen input according to an exemplary embodiment of the present invention. FIG. 3B is a diagram illustrating a strength difference of a signal between a finger touch input and an electronic pen input which are the input methods according to an exemplary embodiment of the present invention.

Referring to FIG. 2, the touch sensor 145 includes the grid type touch sensor where a plurality of a horizontal sensor lines crosses at right angle to a plurality of a vertical sensor lines. The receiving unit 141 is arranged in the horizontal axis, and the transmission unit 143 is arranged in the vertical axis. The controller 160 may control to change the operation of the transmission unit 143 to the receiving unit 141, or change the operation of the receiving unit 141 to the transmission unit 143 by using a switch. In addition, the controller 160 may selectively detect the finger touch input and the electronic pen input according to the user's setting. When the controller 160 detects only the electronic pen input as specified in the user's setting, all sensor lines configuring the touch sensor can function as the receiving unit 141. As illustrated in FIG. 1, the touch sensor 145 comprises the receiving unit 141 and transmission unit 143, but it is not limited thereto. The receiving unit 141 and transmission unit 143 can be disposed at a separate module.

Hereinafter, if there is a finger touch input as shown in FIG. 3A, the operation of element of FIG. 2 performing to detect the input position is as follow.

The controller 160 controls the process in which a power supplied by power supply unit 130 is supplied to the filter 150. Then, the filter 150 uses the power to generate electric signal of a preset frequency and supplies the generated electric signal to the transmission unit 143. A uniform electric field is formed between the transmission unit 143 and the receiving unit 141 through this process. Here, the transmission unit 143 transmits the electric signal to the receiving unit 141. The electric signal maintains a preset value of constant strength of electrical charges prior to the finger touch. If the finger touch input 310 is generated in such state, a charge leakage or electric charge to be dropped at the point of contact. Here, the power supply unit 130 supplies the power to the vertical sensor line and the horizontal sensor line by using the switch, which enables the controller 160 to check for the strength of the charge for each axis in real time to detect whether the charge leakage or drop occurs. Through such detection, the controller 160 may determine that the finger touch input 310 has generated. In addition, the controller 160 may detect the input position by verifying the position where the strength of the electric signal is reduced by the finger touch input 310 based on the coordinate position of the transmission unit 143 and the receiving unit 141 configuring the grid type touch sensor. That is, circuits located at each corner of the panel measure the charge drop and send the information to the controller for processing which in turn determines the X and Y coordinate of the touch activation.

Accordingly, when a plurality of finger touch inputs 310 are occur, the controller 160 may also recognize the occurrence of the finger touch inputs 310 and their input positions in the same manner. Meanwhile, the controller 160 may recognize the occurrence of the passive stylus pen input and detect its input position in the same manner. The controller 160 performs the detection operation, even though the finger touch input 310 and the input of the passive stylus pen input occur together in the input position detection apparatus 100.

Next, when there is the electronic pen input of FIG. 3A, the operation of element of FIG. 2 performing to detect the input position is as follow.

It should be noted that the general active electronic pen uses the electromagnetic induction, however, the electronic pen 200 of the present invention is an active electronic pen which emits an electric field. Since the position detection apparatus 100 of the present invention is not equipped with a magnetic sheet which is used in conjunction with the active electronic pen 200 of the present invention and the active electronic pen of the present invention includes a separate power supply unit for generating the electric field. That is, according to the present disclosure, the active electronic pen may comprise a built-in power supply.

Referring to FIG. 2, the electronic pen 200 forms the electric field between the receiving unit 141 of the position detection apparatus 100. Here, it is not taken consideration of whether the electric field generated by the active electronic pen is uniform or not. The electronic pen 200 generates an electric signal using the electric field and transmits it to the receiving unit 141. That is, the change of the electric field generates electric signals. The controller 160 controls the filter 150 so that the electric signal may have a value of a specific frequency.

The electric signal received by the receiving unit 141 from the transmission unit 143 maintains a preset constant magnitude of peak value.

In other words, the receiving unit 141 receives the internal electric signal of the position detection apparatus 100 while maintaining the constant magnitude of peak value. When there is the electronic pen input 320, both of the transmission unit 143 and electronic pen 200 transmit the electric signal to the receiving unit 141. The receiving unit 141 receives the electric signal from the electronic pen 200. The electric pen 200 can be self-powered by a built-in power supply unit or powered by an external power supply. For example, the external power can be supplied through a USB port of a computer, RFID, or NFC. The electronic pen in the present invention comprises RF transmitter and antenna. The RF transmitter generates E-field and the antenna radiates the generated E-field. The electronic pen can comprises pen point, pressure sensor, power-supply unit and button. Therefore, the receiving unit 141 receives both the electric signal (internal signal) transmitted by the transmission unit 143 and the electric signal (external signal) transmitted by the electronic pen 200.

As a result, when there is the electronic pen input 320, the strength of the electric signal received by the receiving unit 141 is greater than the strength of the electric signal received by the receiving unit 141 without the electronic pen input 320. This is an opposite phenomenon wherein the strength of the electric signal received by the receiving unit 141 becomes less than the strength of the electric signal received by the receiving unit 141 when there is the finger touch input 310. The controller 160 may know the occurrence of a plurality of the electronic pen inputs 320 and a plurality of input positions in the same manner even though when there is a plurality of electronic pen inputs 320.

Also, when both of the finger touch input 310 and the electronic pen input 320 exist, the controller 160 may detect each input by detecting the strength of the signal received by the receiving unit 141. When the strength of the electric signal received at any point in the receiving unit 141 is less than the strength of the internal signal transmitted by the transmission unit 143, the controller 160 determines that the finger touch input 310 exists in the point. On the other hand, when the strength of the electric signal received at any point in the receiving unit 141 is greater than the strength of the internal signal transmitted by the transmission unit 143, the controller 160 determines that the electronic pen input 320 exists in the point.

Accordingly, even though when a plurality of inputs occurs, the controller 160 may detect each input and their input positions/locations. Meanwhile, when the strength of the internal signal transmitted by the transmission unit 143 is identical to the strength of the electrical signal received by the receiving unit 141, the controller 160 can regard that neither the finger touch input 310 nor the electronic pen input 320 occurs.

Further, the controller 160 may control the functions of the receiving unit 141 and the transmission unit 143 configuring the grid type touch sensor. In addition, the controller 160 may selectively detect the finger touch input 310 and the electronic pen input 320 according to the user's setting. When the controller 160 detects only the electronic pen input according to the user's setting, the sensor line configuring the touch sensor may function only as the receiving unit 141. In this case, the internal signal transmitted by the transmission unit 143 does not exist because there is no sensor line serving as the transmission unit 141. Therefore, the controller may detect the input position when the receiving unit 141 receives the electric signal which is stronger than the preset strength, instead of performing the procedure of comparing the strength of the internal signal and the strength of the signal received by the receiving unit 141.

FIG. 3B is a diagram illustrating the difference of the strength of the signal receiving by the receiving unit 141 according to the finger touch input 310 or the electronic pen input 320 according to the exemplary embodiment of the present invention.

The left side diagram and the right side diagram of FIG. 3B respectively illustrate, in the bar graph, the strength of the electric signal received by the receiving unit 141 against to the y axis of the touch sensor on the right side of grid type touch sensor, and the strength of the electric signal received by the receiving unit 141 against to x axis of the touch sensor on the bottom of the grid type touch sensor.

In the left side diagram of FIG. 3B, the maximum value of the bar graph represents the strength of internal signal, in case the finger touch input 310 occur, generated by the transmission unit 143. On the other hand, in the right side diagram of FIG. 3B, the minimum value of the bar graph represents the strength of internal signal, in case the electronic pen input 320 occur, generated by the transmission unit 143.

Referring to the left and right diagrams of FIG. 3B, the controller 160 performs the detection operation of the electric signal in sequence along with the line to be the transmission 143 and the receiving unit 141 configuring the grid type touch sensor as the horizontal axis and the vertical axis respectively. The controller 160 controls first line of the transmission unit 143 to transmit the internal signal to the lines of receiving unit 141 in sequence in uniform strength. Next, the controller 160 controls second line of the transmission unit 143 to transmit the internal signal to the lines of receiving unit 141 in sequence in uniform strength. The lines of receiving unit 141 interacts the lines of transmission unit 143 at a right angle. After repeating this procedure, the controller 160 may know the strength of the signal of each touch sensor coordinate by detecting the strength of the signal of x-axis and y-axis of the grid type touch sensor.

The left diagram of FIG. 3B illustrates the strength of the electric signal receiving by the receiving unit 141 from the point (point A) where the finger touch input 310 is generated and its periphery when there is the finger touch input 310. Here, the controller 160 detects the electric signal having the strength value which is less than the strength of the internal signal as getting close to a corresponding point (point A) upon the occurrence of the finger touch input 310.

The right diagram of FIG. 3B illustrates the strength of the electric signal receiving by the receiving unit 141 from the point (point B) where the electronic pen input 320 is generated and its periphery when there is the electronic pen input 320. Here, when there is the electronic pen input 320, the controller 160 may detect the strength of the signal in which the strength of the existing internal signal and the external signal transmitted by the electronic pen 200 are added. The controller 160 detects the electric signal having the strength value which is greater than the strength of the internal signal as getting close to a corresponding point (point B) upon the occurrence of the electronic pen input 320.

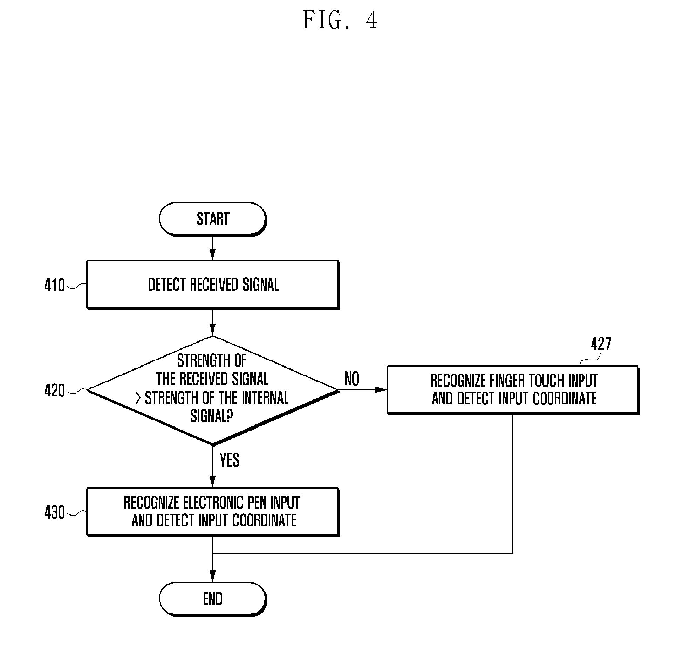

FIG. 4 is a flowchart illustrating the input position detection method according to an exemplary embodiment of the present invention. Referring to FIG. 4, the controller 160 detects the strength of the signal received by the receiving unit 141 (410). This means the strength of the signal received by the receiving unit 141 and the strength of the internal signal is not same.

Here, the signal received by the receiving unit 141 includes the electric signal (internal signal) transmitting to the receiving unit 141 by the transmission unit 143 and the electric signal (external signal) transmitting to the receiving unit 141 by the electronic pen 200. The receiving unit 141 may receive the internal signal and the external signal individually or may receive both signals together from the transmission unit 143 and the electronic pen 200.

The controller 160 compares the strength of the signal received by the receiving unit 141 and the strength of the internal signal (420). When the strength of the received signal is lesser than the strength of the internal signal, the controller 160 recognizes the finger touch input 310 and detects the input coordinate (427). On the contrary to this, when the strength of the received signal is greater than the strength of the internal signal, the controller 160 recognizes the electronic pen input 320 and detects the input coordinate (430).

FIG. 2 illustrates a configuration that a receiving unit 141 and a transmission unit 143 are arranged in a line type. As an alternative, the signal transmitted from the transmission unit 143 may be received by the receiving unit 141 through a plurality of sensing lines. In this case, the receiving unit 141 may selectively or sequentially detect the signal transmitted through the plurality of sensing lines by using a switch. In addition, through the filter 150, the transmission unit 143 may transmit a desired frequency signal only, or the receiving unit 141 may receive a desired frequency signal only. Meanwhile, when the receiving unit 141 detects a signal for a specific position, it can set a proximate area around the specific position where the signal is detected. It can also differentiate the operations of signal detection for the inside of the proximate area and the outside of the proximate area, respectively.

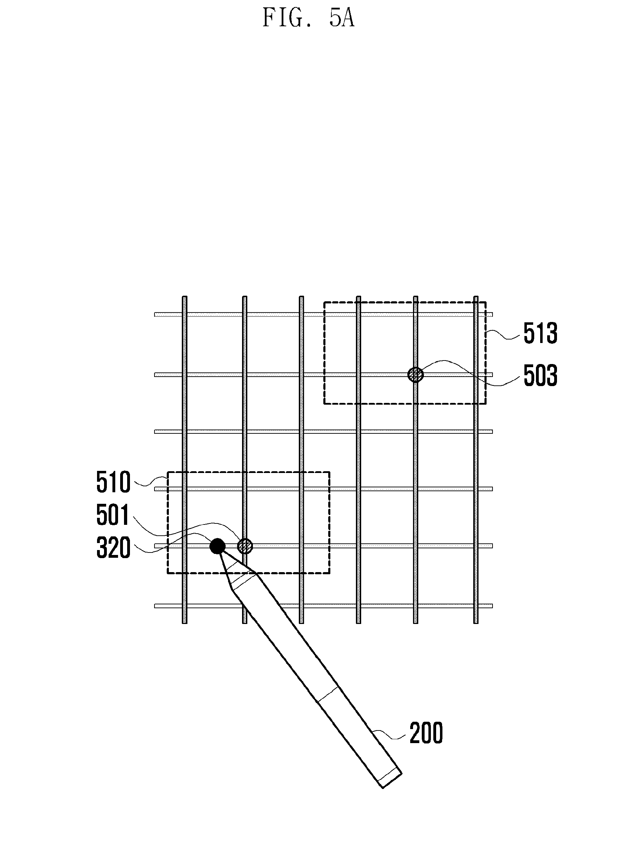

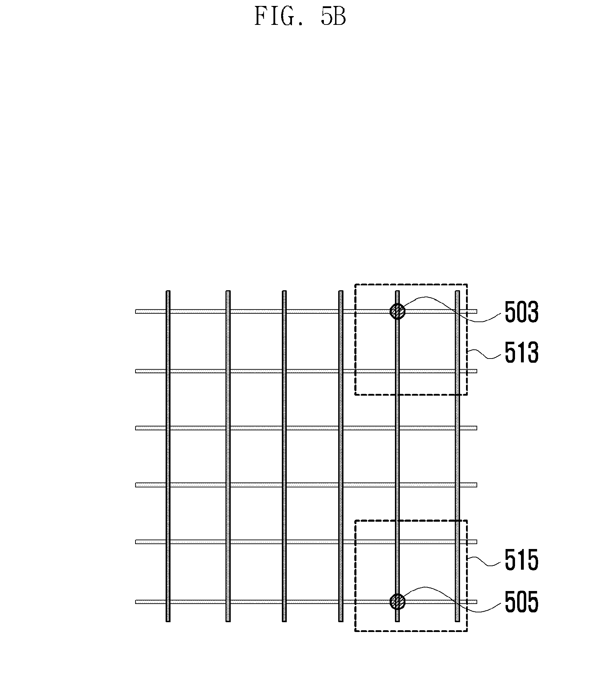

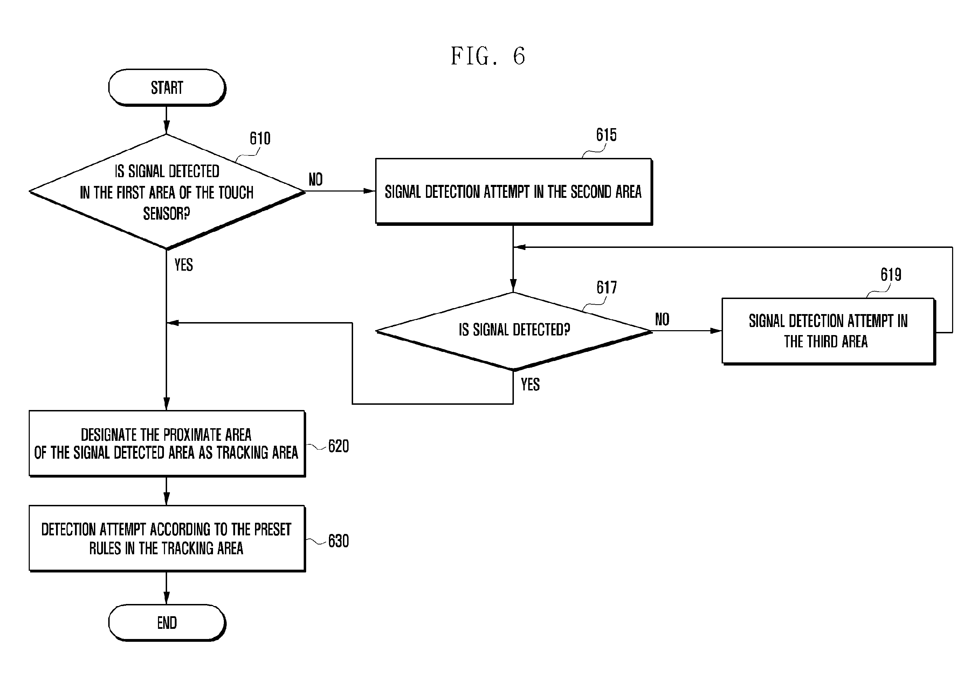

FIGS. 5A and 5B are diagrams illustrating a setting of a proximate area in an input position according to an exemplary embodiment of the present invention. FIG. 6 is a flow chart illustrating an operation of signal detection in the inside of the proximate area and the outside of the proximate area according to an exemplary embodiment of the present invention.

FIGS. 5A and 5B illustrate a plurality of sensor lines arranged with the horizontal axis and the vertical axis. Each sensor line can be connected to the receiving unit 141 and the transmission unit 143 through a switch and a filter. As shown, the sensor lines of the horizontal axis are indicated as R0 to R9, and the sensor lines of the vertical axis are indicated as C0 to C9. Here, it is assumed that the number of the sensor lines of the horizontal axis and the vertical axis is 10, but it is not limited thereto.

Referring to FIG. 6, the controller 160 determines whether the input position is detected (610). Even when inputs are detected in a plurality of positions, in the adjacent detection places, an input position can be determined by the position close to a halfway point among the positions where the signal is detected or by the position where a signal having the strongest strength is detected. For example, the controller can determine that an input is occurred in the point 510 corresponding to the sensor line of the horizontal axis R6 and the sensor line of the vertical axis C5. In this case, the point 510 may be indicated as (R6, C5) as illustrated in FIG. 5A.

The controller 160 sets a proximate area around the input position when the input position is detected (620). For example, two sensor lines adjacent to the input position may be set as the proximate area respectively. That is, the area corresponding to the sensor lines of the horizontal axis R4 to R8 and the sensor lines of the vertical axis C3 to C7 may be set as the proximate area. As an exemplary embodiment of the present invention, FIG. 5A illustrates the proximate area 520 of input position 510.

Meanwhile, the proximate area can be determined in consideration of a movement direction of the input position. For example, as shown in FIG. 5B, a broader proximate area 550 can be set in accordance with the movement direction of the input position. Once the controller determines that an input occurs in the point 510, the input can be detected in another place which is not the point 510. In this case, the direction of the input position can be determined in consideration of the previous detection and the next detection. FIG. 5B illustrates that the controller determines that a new input position occurs in (R5, C6). If the new input position is the point 530, a user input was moved from the point 510 to the point 530. In this case, in accordance with the direction from the point 510 to the point 530, the controller can set the broader proximate area 550 than the proximate area 540 when setting the proximate area for the point 530 as shown in FIG 5B. That is, the proximate area can be two sensor lines adjacent to the input positions in case of not considering the movement direction. On the other hand, the proximate area can be three sensor lines adjacent to the input positions in case of considering the movement direction or an estimated movement path. FIG. 5B illustrates that the controller sets the proximate area 540 for the point 530 in case of not considering the movement direction of the input position. FIG. 5B illustrates that the controller sets the proximate area 550 for the point 530 in consideration of estimated movement path of the input position. FIG. 5B illustrates that one additional sensor line is added for the movement direction of the input position, but it is not limited thereto. For example, two additional sensor lines can be added. Meanwhile, it can be configured in such a manner that the number of sensor lines positioned in the opposite side of the movement direction of the input position may be decreased.

When the proximate area is set, the controller 160 may increase the detection frequency with respect to the inside of the proximate area (630). For example, when the touch sensor 145 includes a plurality of sensing lines, the sensing period of the sensing line inside the proximate area may be decreased. Accordingly, the detection speed for the input position may be increased at the inside of the proximate area.

The controller 160 may decrease the detection frequency with respect to the outside of the proximate area (640). For example, when the touch sensor 145 includes a plurality of sensing lines, the sensing period of the sensing line outside the proximate area may be increased, or alternatively, the sensing of some of the sensing lines outside the proximate area may be omitted. For instance, in a state that the proximate area is not set, the input can be detected in such a manner that all sensing lines are detected once, then all sensing lines are detected once again. In this case, after the setting of the proximate area, the input can be detected in such a manner that the sensing line outside the proximate area is detected once after all sensing lines inside the proximate area are detected three times. The omitting of sensing of some of the sensing lines outside the proximate area may include sensing one line only out of adjacent two lines. Meanwhile, when two or more inputs which are not adjacent each other exist, the remaining area except the inside of the proximate area for each input position can be determined as the outside of the proximate area.

The controller may detect the input as described above based on a preset proximate area until detecting the change of the input position. The controller may increase detection frequency in the inside and the outside of the proximate area respectively. The controller determines again whether the input position is detected after a predetermined time is elapsed (650). In this case, when the input position is not detected, the controller cancels the setting of the proximate area and detects the input position in a state that the proximate area does not exist (660). On the other hand, when the input position is detected, the controller may determine whether the input position is changed (670). When the input position is not changed, sensing is performed based on the preset proximate area. On the other hand, when the input position is changed, the proximate area is set based on the new input position and the input position is detected based on the newly set proximate area.

An electronic pen position detection apparatus and a method using a C-type touch screen panel (TSP) according to an exemplary embodiment of the present invention enables a manufacturer to store a cost in manufacturing an input apparatus by supporting an input method by a finger touch and an electronic pen in one input apparatus.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Although exemplary embodiments of the present invention have been described in detail hereinabove, it should be clearly understood that many variations and modifications of the basic inventive concepts herein taught which may appear to those skilled in the present art will still fall within the spirit and scope of the present invention, as defined in the appended claims.

## Claims

1. An input detection apparatus for a touch screen panel (TSP), comprising;
a power supply unit;
a transmission unit transmitting at least one internal signal formed by a power supplied by the power supply unit;
a receiving unit receiving at least one signal among the at least one internal signal transmitted by the transmission unit and at least one external signal transmitted by at least one electronic pen; and
a controller comparing a strength of the signal received by the receiving unit with a strength of the at least one internal signal transmitted by the transmission unit, determining a type of input means according to the comparison outcome, and detecting an input position of the input means.

2. The apparatus of claim 1, wherein the controller determines the input type as an electronic pen input when the strength of the signal received by the receiving unit is greater than the strength of the internal signal transmitted by the transmission unit.

3. The apparatus of claim 1, wherein the controller determines the input type as a finger touch input when the strength of the signal received by the receiving unit is less than the strength of the internal signal transmitted by the transmission unit.

4. The apparatus of claim 1, further comprising a filter which distinguishes a frequency of the at least one internal signal transmitted by the transmission unit and a frequency of the at least one external signal received by the receiving unit.

5. The apparatus of claim 4, wherein the filter adjusts the frequency of the internal signal transmitted from the transmission unit to a preset value.

6. The apparatus in claim 1, further comprising a plurality of sensing lines over the touch screen panel, wherein, when detecting the input position, the controller defines a proximate area around the detected input position and increases a signal detection frequency of the sensing lines inside the proximate area.

7. The apparatus in claim 6, wherein the controller decreases the signal detection frequency of the sensing lines outside the proximate area.

8. The apparatus in claim 6, wherein the proximate area is determined in consideration of an estimated movement path of the detected input position.

9. An input method for use with a touch screen terminal, the input method comprising:
detecting at least one signal on a touch panel;
comparing a strength of the detected signal with a strength of an internal signal transmitted from a transmission unit; and
determining a type of an input means according to the comparison output and detecting an input position of the input means.

10. The method of claim 9, further comprising determining the detected signal as at least one electronic pen input when the strength of the detected signal is greater than the strength of the internal signal transmitted by the transmission unit.

11. The method of claim 9, further comprising determining the detected signal as at least one finger touch input when the strength of the detected signal is lesser than the strength of the internal signal transmitted by the transmission unit.

12. The method in claim 8, further comprising, when detecting the input position, defining a proximate area around the detected input position.

13. The method in claim 12, wherein the proximate area is determined in consideration of an estimated movement path of the detected input position.

14. The method in claim 12, further comprising increasing a signal detection frequency inside the set proximate area.

15. The method in claim 12, further comprising decreasing a signal detection frequency outside the set proximate area.
